# EUROPÄISCHE PATENTANMELDUNG

(11) **EP 2 073 336 A1**
(43) Veröffentlichungstag der Anmeldung: **24.06.2009**
(21) Anmeldenummer: 07024558.4
(22) Anmeldetag: 18.12.2007
(51) Int. Cl.: H02J 3/00, H01H 71/00, H01H 83/00, G06F 1/26

(54) **Elektrisches Gerät zum Management von mehreren elektrischen Verbraucherabzweigen**

(71) Anmelder: Siemens Aktiengesellschaft, 80333 München (DE)
(72) Erfinder: Birkenstock, Genia, 90411 Nürnberg (DE)

(57) **Zusammenfassung**

Die Erfindung betrifft ein elektrisches Gerät zum Management von mehreren elektrischen Verbraucherabzweigen(1,2), mit einem Dateneingang (Ei) zur Eingabe aktueller Zustandsdaten, mit einem Speicher(S), in dem Daten bezüglich abzweigspezifischer Schaltbedingungen hinterlegt sind und mit einer Auswerteeinheit (A), die zum Vergleich der eingegebenen Zustandsdaten mit den im Speicher (S) hinterlegten Daten bedient und die hiervon abhängig zur Erzeugung eines oder mehrerer Steuersignale zum Zu- oder Abschalten eines oder mehrerer Verbraucherabzweige (1,2) vorgesehen ist.

## Beschreibung

Die Erfindung betrifft ein elektrisches Gerät zum Management von mehreren elektrischen Verbraucherabzweigen.

Bisher bekannt ist ein Energiemanagement durch überlagerte Systeme und Steuerungen, die aufwendig und teuer sind. Verbraucherabzweige werden heute durch Schaltgeräte ein- und ausgeschaltet, die dem jeweiligen Verbraucherabzweig zugeordnet sind und die den Schaltbefehl von übergeordneten Systemen erhalten, d.h., selbst keine Intelligenz besitzen. Diese Schaltgeräte sind nicht in der Lage, die Querbeziehung zwischen mehreren voneinander abhängigen Abzweigen zu steuern.

Andererseits müssen Energiebedarfe von Industrieanlagen aufgrund der steigenden Energiepreise und Ressourcenknappheit optimiert und reduziert werden. Energieeinsparung ist ein zentrales Thema bei allen Anlagenbetreibern.

Daher liegt der Erfindung die Aufgabe zugrunde, ein elektrisches Gerät zum Management von mehreren elektrischen Verbraucherabzweigen vorzuschlagen, das einfach aufgebaut und kostengünstig herzustellen ist.

Die Aufgabe wird durch ein elektrisches Gerät mit den Merkmalen nach Anspruch 1 gelöst. Das elektrische Gerät schafft nicht nur einen reinen wirtschaftlichen Nutzen für den Kunden, sondern die Möglichkeit, Verbraucherabzweige sinnvoll zu clustern und dezentral zu managen. Durch die Dezentralisierung des Energiemanagement entstehen folgende Vorteile:
- Kostengünstige Lösung, die auch schon für einige wenige Verbraucherabzweige rentabel ist.
- Dezentrale Lösung, die auch autark, d.h., unabhängig von überlagerten Systemen funktioniert.
- Sinnvolle Clusterung von Verbraucherabzweiggruppen nach Funktionen.
- Leichte Integration von abzweigspezifischer Zusatzintelligenz.
- Die Kombination von gegenläufigen Themen wie Verfügbarkeit und Energieeinsparung.

Vorteilhafte Weiterbildungen des elektrischen Geräts nach Anspruch 1 sind den Unteransprüchen 2 bis 5 zu entnehmen. Ein Ausführungsbeispiel der Erfindung wird im Folgenden anhand einer Zeichnung näher erläutert.

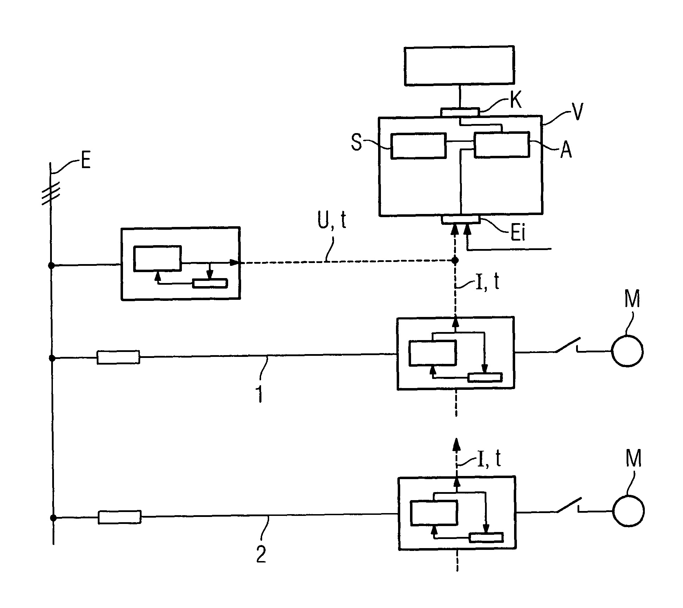

In der Zeichnung ist ein erfindungsgemäßes elektrisches Gerät V zum Management von mehreren elektrischen Verbraucherabzweigen 1 und 2 dargestellt. Das Gerät V weist einen Dateneingang Ei zur Eingabe aktueller Zustandsdaten, einen Speicher S und eine Auswerteeinheit A auf. In dem Speicher S sind Daten hinterlegt, die abzweigspezifische Schaltbedingungen betreffen, z.B. Schwellwerte für die elektrische Wirkleistung der Verbraucherabzweige 1,2 und/oder beispielsweise Temperaturwerte eines Prozesses oder von Maschinen.

Die aktuellen Zustandsdaten können u.a. Strom- I und Spannungswerte U sowie zugehörige Zeitstempel t für mindestens einen der Verbraucherabzweige 1,2 sein, die im vorliegenden Ausführungsbeispiel gemäß der Figur als Motorabzweige mit einem Motor M ausgeführt sind. Diese Daten werden von der Auswerteeinheit A ausgewertet, indem aufgrund der Zeitstempel t der zugehörige Strom- I und Spannungswert U ausgewählt und hieraus der für den jeweiligen Zeitstempel t zugeordnete Leistungswert berechnet wird. Aus einer Vielzahl von Leistungswerten wird in bekannter Weise die Wirkleistung gebildet. Durch Vergleich mit dem im Speicher S hinterlegten Schwellwert für den betreffenden Verbraucherabzweig 1,2 erfasst die Auswerteeinheit A, ob dieser über- oder unterschritten wird und erzeugt dementsprechend einen oder mehrere Steuersignale zum Zu- oder Abschalten eines oder mehrerer Verbraucherabzweige 1,2. Das Gerät V dient dem dezentralen Einsatz und sendet die Steuersignale direkt an die anzusteuernden Schaltgeräte, wobei die Übertragung der Steuersignale drahtlos oder drahtgebunden erfolgen kann.

Diese Ausführung ermöglicht es, z.B. die Verbraucherabzweige 1,2 gezielt nach Energieverbrauch zu steuern, um Spitzenlastkosten zu reduzieren, ohne Prozessabläufe zu gefährden. Hierbei werden alle Aspekte wie Prozesssicherheit, Verfügbarkeit der Anlage und Kostenoptimierung zu einem sinnvollen Applikationsmanagement zusammengefasst und die Priorität eines Verbraucherabzweigs abhängig von anderen überwachten Parametern eventuell dynamisch angepasst.

Der Zeitstempel t ist dabei eine Zeitinformation, die der jeweils erfasste Strom- I oder Spannungswert U im Moment der Erfassung zugeordnet wird, z.B. durch Timer. Die bei der Strom- und Spannungserfassung für einen Verbraucherabzweig 1 oder 2 verwendeten Timer müssen untereinander synchronisiert sein, damit zugehörige Strom- I und Spannungswerte U aufgrund der Zeitstempel t selektiert werden können. Als Zeitstempel t kann z.B. auch die absolute Zeit dienen, wofür synchronisierte Zeitgeber zu verwenden sind.

Für den Fall, dass die Verbraucherabzweige 1,2 über eine zentrale Einspeisung E versorgt werden und dabei die Spannung an den Verbraucherabzweigen 1,2 nahezu gleich ist, genügt die Spannungserfassung mit zugehörigen Zeitstempeln t an nur einer Stelle, während die Stromerfassung in jedem Verbraucherabzweig 1,2 gesondert durchgeführt werden muss. Hierbei müssen der Timer bei der Spannungserfassung und die Timer für die Stromerfassung beider Verbraucherabzweige 1, 2 untereinander synchronisiert sein.

Das Gerät V weist außerdem eine Schnittstelle K zur Kommunikation mit anderen Geräten, z.B. zum Energiemanagement oder mit einem übergeordneten System auf.

## Patentansprüche

1. Elektrisches Gerät (V) zum Management von mehreren elektrischen Verbraucherabzweigen (1,2), mit einem Dateneingang (Ei) zur Eingabe aktueller Zustandsdaten, mit einem Speicher (S), in dem Daten bezüglich abzweigspezifischer Schaltbedingungen hinterlegt sind und mit einer Auswerteeinheit (A), die zum Vergleich der eingegebenen Zustandsdaten mit den im Speicher (S) hinterlegten Daten dient und die hiervon abhängig zur Erzeugung eines oder mehrerer Steuersignale zum Zu- oder Abschalten eines oder mehrerer Verbraucherabzweige (1,2) vorgesehen ist.

2. Gerät nach Anspruch 1, **dadurch gekennzeichnet, dass** im Speicher (S) als abzweigspezifische Schaltbedingungen für die Verbraucherabzweige (1,2) zugehörige Schwellwerte der Wirkleistung hinterlegt sind und dass die Auswerteeinheit (A) zur Erzeugung eines oder mehrerer Steuersignale zum Zu- oder Abschalten betreffender Verbraucherabzweige (1,2) bei Unter- oder Überschreiten mindestens eines dieser Schwellwerte dient.

3. Gerät nach einem Ansprüche 1 oder 2, **dadurch gekennzeichnet, dass** die aktuellen Zustandsdaten Strom- (I) und Spannungswerte (U) sowie zugehörige Zeitstempel (t) für mindestens einen der Verbraucherabzweige (1,2) sind und die Auswerteeinheit (A) zur Bildung der Wirkleistung aus den Strom-(I) und Spannungswerten (U) sowie zugehörigen Zeitstempeln (t) für mindestens einen der Verbraucherabzweige (1,2) dient.

4. Gerät nach einem der oben genannten Ansprüche, **dadurch gekennzeichnet, dass** als aktuelle Zustandsdaten nichtabzweigspezifische Daten, insbesondere Daten eines über mindestens einen der Verbraucherabzweige gesteuerten Prozess, dienen und entsprechende Schwellwerte im Speicher (S) hinterlegt sind, und dass die Auswerteeinheit (A) zur Erzeugung eines oder mehrerer Steuersignale zum Zu- oder Abschalten betreffender Verbraucherabzweige (1,2) bei Unter- oder Überschreiten mindestens eines dieser Schwellwerte dient.

5. Gerät nach Anspruch 1, **dadurch gekennzeichnet, dass** mindestens einer der Verbraucherabzweige (1,2) als Motorabzweig ausgeführt ist.
